# EUROPEAN PATENT APPLICATION

(11) **EP 3 923 125 A1**
(43) Date of publication of application: **15.12.2021**
(21) Application number: 20305627.0
(22) Date of filing: 10.06.2020
(51) Int. Cl.: G06F 3/02, B42D 1/00, G09B 5/06, G06F 1/16, G06F 3/044

(54) **HOLDER, BOOK, AND INTERACTIVE BOOK SYSTEM COMPRISING SAID HOLDER AND SAID BOOK**

(71) Applicant: Bugali, 75002 Paris (FR)
(72) Inventor: HISQUIN, François, 78110 LE VESINET (FR)
(74) Representative: August Debouzy

(57) **Abstract**

The present invention relates to a holder (10) configured for receiving a book (20) comprising a book-identifier (26) and a plurality of pages, each page (25) comprising a page-identifier; wherein said holder comprises: first fastening means to removably fasten the holder to the book; a user input detection device; a book-identifier detection device; a page-identifier detection device; and a controller (18) connected to the user input detection device, the book-identifier detection device and the page-identifier detection device. The invention further relates to a book (20) configured to be fastened to an holder and to an interactive book system comprising an holder (10) and at least one book (20).

## Description

### FIELD OF THE INVENTION

The present invention pertains to the field of books. More specifically, the present invention relates to a holder for receiving a book, to a book and to an interactive book system comprising at least one book, a holder and an interactive device. The present invention has applications in educational books increasing the interest and interactivity of the readings.

### BACKGROUND OF THE INVENTION

Most of the interactive books on the market today are provided with an embedded interactive device, such as a speaker or a vibrating device.

Due to the presence of an interactive device in each book, the production cost of the book is generally high and the quality of the interactive device is low.

In addition, the interactive books are restricted in terms of interaction. Usually, the user can press a limited number of buttons or touch a limited number of dedicated positions. The user input on the buttons or on the positions causes always the same output signal, usually a sound or a vibrating pattern.

Another problem with interactive books on the market today is that each book necessarily includes a battery, a controller and a memory storing a content to be played by the interactive device. Hence, the book is cumbersome, impractical and requires frequent change of battery.

Accordingly, there is still a need to provide an interactive book without suffering from the above-described drawbacks.

The present invention lies within this context.

### SUMMARY OF THE INVENTION

According to a **first aspect of the invention,** there is provided a holder configured for receiving a book comprising a book-identifier and a plurality of pages, each page comprising a page-identifier; wherein said holder comprises:
- first fastening means to removably fasten the holder to the book;
- a user input detection device;
- a book-identifier detection device;
- a page-identifier detection device; and
- a controller connected to the user input detection device, to the book-identifier detection device and to the page-identifier detection device.

According to embodiments of the invention, said controller comprising wireless communication means.

According to embodiments of the invention, the holder comprises a front cover, a back cover and a spine.

According to embodiments of the invention, the user input detection device is disposed inside the front cover and/or the back cover.

According to embodiments of the invention, the user input detection device comprises a resistive touch panel or a capacitive touch panel.

According to embodiments of the invention, the book-identifier detection device is disposed inside the front cover, the back cover or the spine, preferably inside the back cover.

According to embodiments of the invention, the book-identifier detection device comprises a near-field communication (NFC) tag reader or a radio-frequency identification (RFID) tag reader.

According to embodiments of the invention, the page-identifier detection device comprises infrared transceivers configured to be aligned with the page-identifier of each page of the book.

According to embodiments of the invention, the page-identifier detection device is disposed inside the spine.

According to embodiments of the invention, the controller is disposed inside the front cover, the back cover or the spine, preferably inside the back cover.

According to embodiments of the invention, the first fastening means comprises a magnetic or ferrous material to fasten the book to the holder using magnetic attraction.

According to embodiments of the invention, the holder further comprises at least one output device such as a haptic device or a lighting device; wherein the at least one output device is connected to the controller.

According to a **second aspect of the invention,** there is provided a book configured to be fastened to an holder comprising first fastening means, the book comprising:
- second fastening means to removably fasten the book to the first fastening means of the holder;
- a plurality of pages;
- a book-identifier; and
- a page-identifier in each page.

According to embodiments of the invention, the book comprises a second front cover, a second back cover and a second spine.

According to embodiments of the invention, the book-identifier is disposed inside the second front cover, the second back cover or the second spine, preferably inside the second back cover.

According to embodiments of the invention, the book-identifier comprises a near-field communication (NFC) tag or a radio-frequency identification (RFID) tag.

According to embodiments of the invention, the page-identifier comprises a tab located along an inner edge of the page; and wherein the tab of each page is located on a different location.

According to embodiments of the invention, one side of each tab is covered with an infrared reflecting coating.

According to embodiments of the invention, the book, preferably the second spine, comprises a plurality of rings, the plurality of pages being retained by the rings; and wherein the tabs are located below the rings.

According to embodiments of the invention, the second spine comprises a transparent material or an opening below each tab.

According to embodiments of the invention, the second fastening means comprises a magnetic or ferrous material to fasten the book to the holder using magnetic attraction.

According to embodiments of the invention, the second fastening means comprises a rail comprising a ferrous material disposed in the second spine.

According to a **third aspect of the invention,** there is provided an interactive book system comprising a holder according to embodiments of the first aspect of the invention, at least one book according to embodiments of the second aspect of the invention and an interactive device, wherein the interactive device comprises a second controller comprising second communication means and wherein the second controller is configured, in response to receiving a book-identifier, a page-identifier and a user input from the first controller to product an output signal.

According to embodiments of the invention, the second controller comprises a memory configured to store a content associated with the book-identifier, the page-identifier and the user input signal.

According to embodiments of the invention, the interactive device comprises a second output device such as a speaker, a projector and/or a display.

According to embodiments of the invention, the interactive device is a smartphone.

According to embodiments of the invention, the first controller and the second controller communicates through wireless communication means, such as Bluetooth.

A **fourth aspect of the invention** is directed to the use of the interactive book system as an educational book system increasing the interest and interactivity of the readings.

A **fifth aspect of the invention** is directed to the use of the interactive book system as a baby-monitoring system.

### BRIEF DESCRIPTION OF THE DRAWINGS

Figure 1 is a top view of the assembly comprising a holder and a book according to embodiments of the invention;
Figure 2 is a cross-sectional view of the interactive book system through the spines of the holder and book according to embodiments of the invention;
Figure 3 is an enlarged cross-sectional view of the circle denoted with the letter K in figure 2;
Figure 4 is an enlarged view of the circle denoted with the letter A in figure 1;
Figure 5 is a top view of a holder according to embodiments of the invention;
Figure 6 is an enlarged view of the circle depicted in figure 5;
Figure 7 is a cross-sectional view of the interactive book system through a ring of the book according to embodiments of the invention;
Figure 8 is a schematic diagram of the interactive book system according to embodiments of the invention.

### DETAILED DESCRIPTION OF THE INVENTION

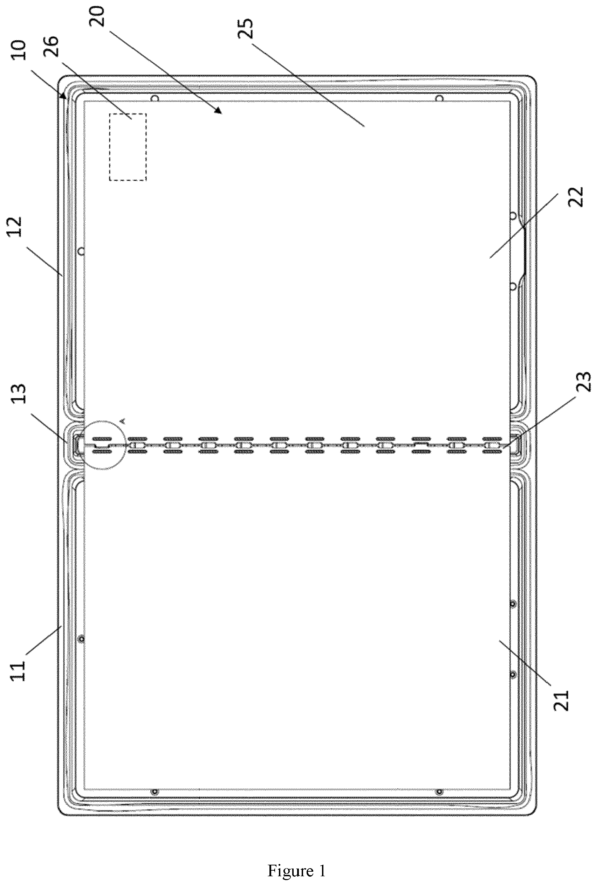

Referring to figure 1, an open holder 10 receiving a removable open book 20 is shown.

The holder comprises a front cover 11, a back cover 12 and a spine 13 extending between the front cover and the back cover. The holder is in the form of a book and may be made essentially from paperboard or plastic material.

The holder 10 is configured for receiving a removable book 20. The book comprises one or more printed pages 25. A story, a picture and/or a game may be printed on the pages. The book is preferably made essentially from paperboard.

The book comprises a second front cover 21, a second back cover 22 and a second spine 23 extending between the second front cover and the second back cover.

As depicted in figure 1, the book 20 comprises a book-identifier 26 integrated within the back cover. The book-identifier may be any passive tag that may be read by the holder, such as for instance a near-field communication (NFC) tag or a radio-frequency identification (RFID) tag. The book 20 does not comprise any electronic circuitry except, if any, the book-identifier tag. Thus the risks of damage of the book and the costs of manufacture are reduced. The book also does not include any battery and does not need to be powered.

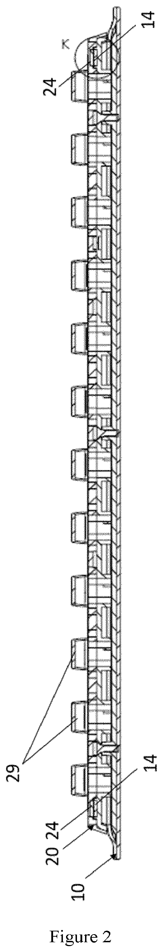

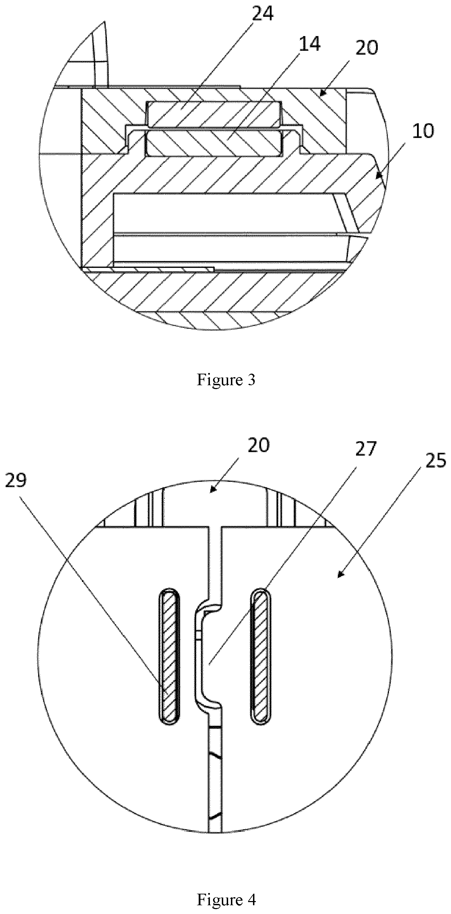

Referring to figures 2 and 3, the fastening means 14, 24 between the holder 10 and the book 20 are shown. The holder 10 comprises first fastening means 14 disposed in the first spine 13. The book 20 comprises second fastening means 24 disposed in the second spine and configured to cooperate with the first fastening means 14. In the depicted embodiment, the first fastening means comprises a magnetic or ferrous material and the second fastening means comprises respectively a ferrous or magnetic material so that the book is fastened to the holder using magnetic attraction. As depicted in figure 3, the holder 10 and the book 20 may comprise a plurality of fastening means 14, 24 disposed along respectively the first spine 13 and the second spine 23. In order to improve fastening of the removable book 20 within the holder 10, at least two fastening means 14, 20 are disposed apart from each other along respectively the first spine 13 and the second spine 23.

Figure 2 further illustrates a plurality of rings 29, secured to the spine 23 of the book 20, retaining the pages 25. The pages 25 are perforated and retained in the rings near their inner edge.

Referring to figure 4, an enlarged view of a page-identifier 27 of a page 25 of the book 20 is shown. As depicted a page-identifier 27 comprises a tab extending from the inner edge of a page 25 above the spine 23. Each page 25 which has to be identified comprises a tab different from the one of another page in order to differentiate each page. According to embodiments, the tab extends below one ring 29. This feature reduces the risk of damage of the tab and extends the duration of use of the book 20. According to embodiments, the book 20 comprises as many rings as there are pages to be identified. According to embodiments, the book comprises more rings than pages to be identified. These latter features ensure that each tab can be covered by a ring. According to embodiments, one side of the tab is coated with an infrared reflecting coating. According to embodiment, the other side of the tab is coated with an infrared absorbing coating. This feature enables to differentiate between the front side and the back side of the same page. According to embodiments, the same side of each tab if coated with the same infrared reflecting or absorbing coating.

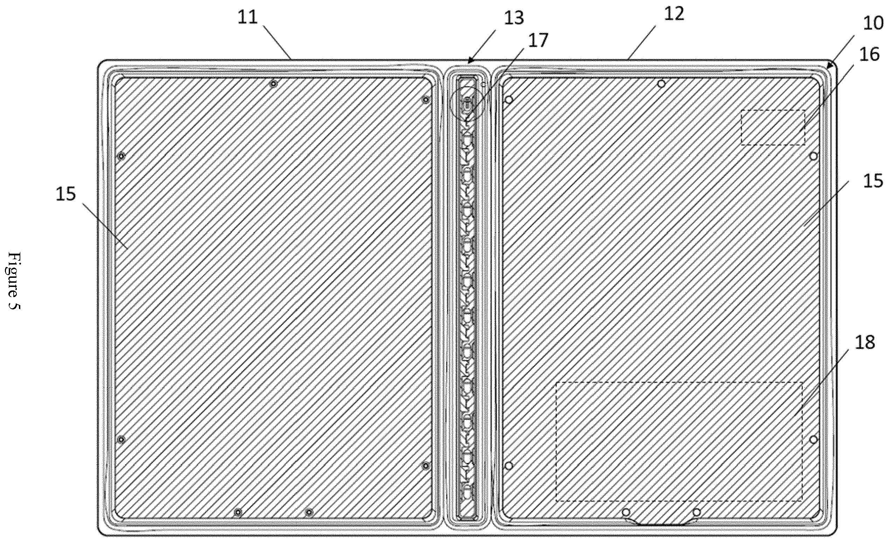

Referring to figure 5, an open holder 10 is shown.

The holder 10 comprises a user-input detection device 15 integrated inside the front cover 11 and the back cover 12. The user-input detection device is a touch panel, either resistive or capacitive. The touch panel increases the interactivity of the interactive system of the prior art by allowing detection of multiples movements of the user: for instance clicks, drag, double click, two finger pinch...

The holder 10 comprises a book-identifier detection device 16 integrated inside the back cover 12. As depicted the book-identifier detection device 16 is located inside the back cover 12 to cooperate with the book-identifier 26 located inside the second back cover 22 of the book 20. The book-identifier detection device 16 allows reading the book-identifier tag 26. The book-identifier detection device 16 may be a near-field communication (NFC) tag reader or a radio-frequency identification (RFID) tag reader.

The holder 10 comprises a page-identifier detection device 17 integrated inside the holder 10. As depicted the book-identifier detection device 16 is located along the spine 13 to cooperate with the page-identifier of each page located above the second spine 23 of the book 20. The page-identifier detection device 17 allows detecting the page-identifier 27. The page-identifier detection device 17 comprises infrared transceivers configured to be aligned with the page-identifier of each page of a book when the book is received in the holder. According to embodiments, the page-identifier detection device 17 comprises as many infrared transceivers as the maximum number of pages of a book. The maximum number of pages of a book is ranging from 5 to 30, preferably from 15 to 25.

In order to ensure transmission of the infrared signal from the infrared transceivers, the second spine 23 comprises an opening or an infrared transparent material configured to be located above each infrared transceivers of the holder when the book is received with the holder.

When a tab of a page-identifier is located above the infrared transceivers, the infrared transceivers detect the tab. If no tab is located above the infrared transceivers, the infrared transceivers detect the absence of tab. Thus the page-identifier detection device detects the open page of the book. To differentiate between the front side and the back side of each page, as mentioned above, on side of the tab may be coated with an infrared reflecting coating.

Each of the user-input detection device 15, the book-identifier detection device 16 and the page-identifier detection device 17 are connected to a controller 18.

The controller 18 comprises a processor 18a which may be a microprocessor, a memory 18b which may be random access memory (RAM) for storing executable code for implementing the page and book detection according to embodiments the invention or a read only memory (ROM) for storing computer programs for implementing the page and book detection according to embodiments of the invention; and a communication interface 18c typically connected to a communication network over which digital date are transmitted or received. The communication interface may a single communication interface or composed of a set of different network interfaces, for instance a Bluetooth communication interface. The controller 18 is connected to the book-identifier detection device and configured to communicate with the book-identifier detection device to retrieve the identification of the book. The controller is further connected to page-identification detection device and configured to communicate with the page-identification detection device to retrieve the identification of the open page of the book. The controller is further connected to user-input detection device and configured to communicate with the user-input detection device to retrieve the user input on the open page of the book.

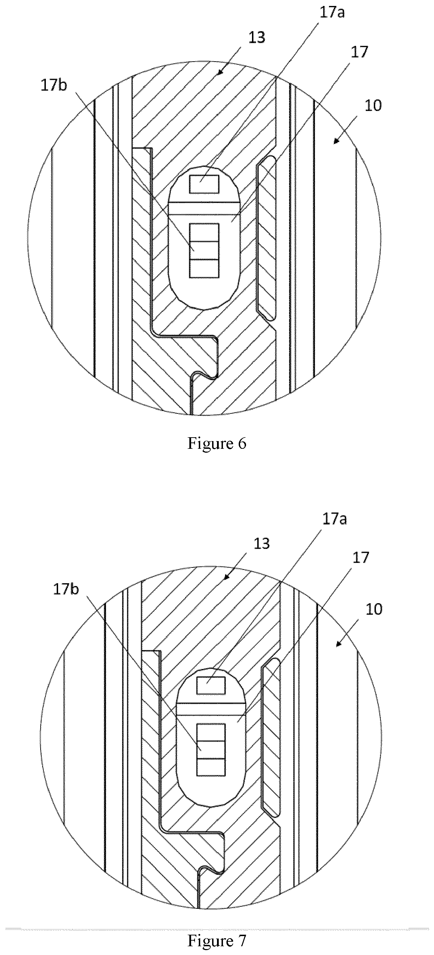

Referring to figures 6 and 7, an enlarged view of the page-identifier 27 and the page-identifier detection device 17 is shown. A page-identifier detection device is shown in figure 6. As mentioned above, the spine 13 comprises a plurality of page-identifier detection devices 17 located along the spine to detect a plurality of pages 25. The page-identifier detection device comprises infrared transceivers, i.e. an infrared transmitter 17a and an infrared receiver 17b combined into a single unit. As depicted in figure 7, a tab 27 is located above the infrared transceivers 17 so that the page 25 comprising the tab 27 may be detected as the corresponding infrared transceivers is saturated by infrared light as compared to the other infrared transceivers.

The holder 20 further comprises a power supply (not represented) such as a battery.

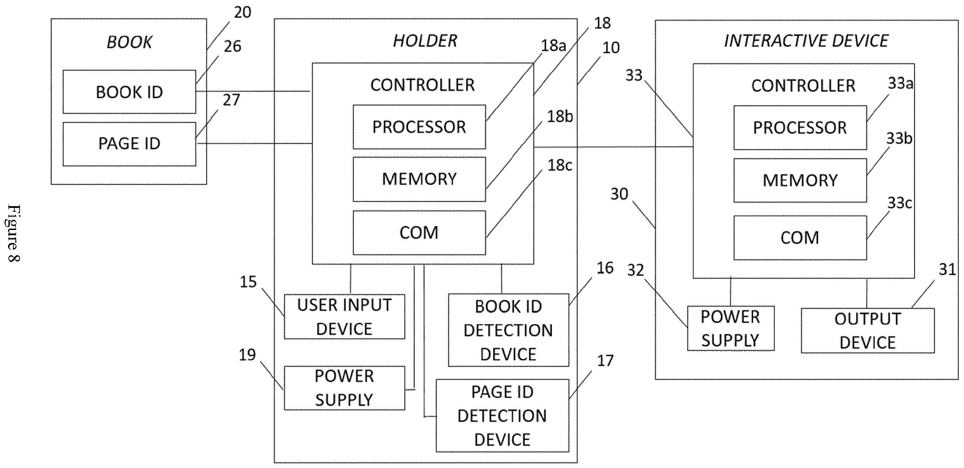

Referring to figures 8, a schematic diagram of the interactive book system is shown.

The interactive book system comprises a book 20 according to embodiments of the invention, a holder 10 according to embodiments of the invention and an interactive device 30. The interactive device 30 comprises a second controller 33 comprising a second processor 33a which may be a microprocessor, a second memory 33b which may be random access memory (RAM) for storing executable code for implementing the page and book detection according to embodiments the invention or a read only memory (ROM) for storing computer programs for implementing the page and book detection according to embodiments of the invention; and a second communication interface 33c typically connected to a communication network over which digital date are transmitted or received. The second communication interface may a single communication interface or composed of a set of different network interfaces, for instance a Bluetooth communication interface. The second controller 33 is configured to communicate with the first controller 18 of the holder 10. The second controller 33 is configured to retrieve the book-identifier, the page-identifier and the user input from the first controller 18.

According to embodiments of the invention, the second memory is configured to store a content associated with the book-identifier, the page-identifier and predefined user input signals.

The interactive device 30 further comprises an output device 31 connected to the controller 33.

The controller is configured to produce an output signal on the output device 31 depending on the content associated in the second memory 33b with the book-identifier, the page-identifier and the user input signal.

According to embodiments, the interactive device 30 may be a speaker, a projector and/or a display.

The interactive device 30 further comprises a power supply 32. The interactive device can be AC or battery powered.

While the invention has been illustrated and described in detail in the drawings and foregoing description, such illustration and description are to be considered illustrative or exemplary and not restrictive, the invention being not restricted to the disclosed embodiment. Other variations to the disclosed embodiment can be understood and effected by those skilled in the art in practicing the claimed invention, from a study of the drawings, the disclosure and the appended claims.

In the claims, the word "comprising" does not exclude other elements or steps, and the indefinite article "a" or "an" does not exclude a plurality. The mere fact that different features are recited in mutually different dependent claims does not indicate that a combination of these features cannot be advantageously used. Any reference signs in the claims should not be construed as limiting the scope of the invention.

## Claims

1. A holder (10) configured for receiving a book (20) comprising a book-identifier (26) and a plurality of pages, each page (25) comprising a page-identifier (27); wherein said holder comprises:
- first fastening means (14) to removably fasten the holder to the book;
- a user input detection device (15);
- a book-identifier detection device (16);
- a page-identifier detection device (17); and
- a controller (18) connected to the user input detection device, the book-identifier detection device and the page-identifier detection device.

2. The holder (10) according to claim 1, wherein the user input detection device (15) comprises a resistive touch panel or a capacitive touch panel.

3. The holder (10) according to anyone of claims 1 to 2, wherein the book-identifier detection device (16) comprises a near-field communication (NFC) tag reader or a radio-frequency identification (RFID) tag reader.

4. The holder (10) according to anyone of claims 1 to 3, wherein the page-identifier detection device (17) comprises infrared transceivers (17a) configured to be aligned with the page-identifier (27) of each page of the book.

5. The holder (10) according to anyone of claims 1 to 4, wherein the first fastening means (14) comprises a magnetic or ferrous material to fasten the book to the holder using magnetic attraction.

6. The holder (10) according to anyone of claims 1 to 5, further comprising at least one output device such as a haptic device or a lighting device; wherein the at least one output device is connected to the controller.

7. A book (20) configured to be fastened to an holder (10) comprising first fastening means (14), the book comprising :
- second fastening means (24) to removably fasten the book (20) to the first fastening means (14) of the holder (10);
- a plurality of pages;
- a book-identifier (26); and
- a page-identifier (27) in each page (25).

8. The book (20) according to claim7, wherein the book-identifier (26) comprises a near-field communication (NFC) tag or a radio-frequency identification (RFID) tag.

9. The book (20) according to anyone of claims 7 to 8, wherein the page-identifier (27) comprises a tab (28) located along an inner edge of the page (25).

10. The book (20) according to claim 9, wherein one side (28) of each tab is covered with an infrared reflecting coating.

11. The book (20) according to anyone of claims 9 to 10, comprising a plurality of rings (29), the plurality of pages being retained by the rings; and wherein the tabs (28) are located below the rings (29).

12. The book (20) according to anyone of claims 7 to 11, wherein the second fastening means (24) comprises a magnetic or ferrous material to fasten the book to the holder using magnetic attraction.

13. An interactive book system comprising a holder according to anyone of claims 1 to 6, at least one book according to anyone of claims 7 to 12 and an interactive device, wherein the interactive device comprises a second controller comprising second communication means and wherein the second controller is configured, in response to receiving a book-identifier, a page-identifier and a user input from the first controller to product an output signal.

14. The interactive book system according to claim 13, wherein the interactive device comprises a second output device such as a speaker, a projector and/or a display.

15. Use of the interactive book system according to anyone of claims 13 to 14 as a as an educational book system or as a baby-monitoring system.
